# EUROPÄISCHE PATENTSCHRIFT

(11) **EP 3 300 823 B1**
(45) Veröffentlichungstag und Bekanntmachung des Hinweises auf die Patenterteilung: **04.12.2019**
(21) Anmeldenummer: 16191526.9
(22) Anmeldetag: 29.09.2016
(51) Int. Cl.: B23B 41/00, G05B 19/402, B21J 15/14, B21J 15/42, B21J 15/44, F16B 5/02, F16B 43/00

(54) **VERFAHREN UND BEARBEITUNGSSYSTEM ZUR HERSTELLUNG EINER TOLERANZAUSGLEICHSSCHEIBE**
METHOD AND PROCESSING SYSTEM FOR THE PRODUCTION OF TOLERANCE COMPENSATION DISC
DISPOSITIF ET SYSTÈME D'USINAGE POUR FABRICATION D'UNE RONDELLE DE COMPENSATION DE TOLÉRANCE

(43) Veröffentlichungstag der Anmeldung: 04.04.2018
(73) Patentinhaber: Airbus Defence and Space GmbH, 82024 Taufkirchen (DE); AIRBUS HELICOPTERS DEUTSCHLAND GmbH, 86609 Donauwörth (DE)
(72) Erfinder: Geßler, Andreas, 85540 Haar (DE); Meer, Thomas, 85658 Egmating (DE); Scheid, Peter, 82380 Peißenberg (DE); Thum, Christian, 86720 Nördlingen (DE)
(74) Vertreter: Isarpatent

(56) Entgegenhaltungen:
- WO-A2-2005/036286
- DE-A1-102007 031 703
- US-A- 3 006 443

## Beschreibung

Die vorliegende Erfindung betrifft ein Verfahren und ein Bearbeitungssystem zur Herstellung einer Toleranzausgleichsscheibe.

Bei der Montage von Baugruppen müssen häufig überlappende Bauteile der Baugruppe miteinander verbunden werden. Insbesondere bei der Montage von Luftfahrzeugen wird dies oftmals durch Niet- oder Bolzenverbindungen realisiert, bei denen sich ein Schaft des Niets oder des Bolzens durch in den Bauteilen ausgebildete Durchgangsbohrungen erstreckt.
Um Fertigungstoleranzen auszugleichen werden die zu fügenden Teile in der Regel mittels Vorrichtungen zueinander fixiert und dann zusammen verbohrt.

Die US 4,309,123 offenbart eine Baugruppe mit einem ersten und einem zweiten Bauteil, in welchen jeweils eine Durchgangbohrung ausgebildet ist. Hierbei ist eine der Durchgangsbohrungen mit einem größeren Durchmesser ausgebildet, wodurch eine Anordnung der Bauteile in einem vergrößerten Toleranzbereich ermöglicht wird. Zum Ausgleich eines Spiels zwischen einem sich durch die Durchgangsbohrungen erstreckenden Schaft eines Bolzens wird eine Toleranzausgleichsscheibe mit einer exzentrischen Bohrung in die Durchgangsbohrung mit größerem Durchmesser eingesetzt. Durch Drehen der Toleranzausgleichsscheibe kann die Mittelachse einer Ausnehmung der Toleranzausgleichsscheibe in Übereinstimmung mit der Mittelachse der Durchgangsbohrung mit kleinerem Durchmesser gebracht werden.

Aus dem Bereich der Fertigung von optischen Linsen, beispielsweise aus der DE 10 2007 031703 A1, sind Bearbeitungssysteme zum spanenden Bearbeiten von Kunststoffrohlingen mit hermetisch geschlossenen Arbeitskammern bekannt.

Die WO 2005/036286 A2 beschreibt ein System zum Bohren von optischen Gläsern mit einer Bohrvorrichtung, die mittels einer Positioniereinrichtung bewegbar ist, mit einem Halter und mit einer optischen Erfassungseinrichtung zum Erfassen einer Position von sich auf einer Schablone befindlichen Bohrungen und von an dem Halter angebrachten Markierungen, wobei diese erfassten Positionen zur Positionierung der Bohrvorrichtung verwendet werden.

Es ist Aufgabe der vorliegenden Erfindung ein Verfahren und ein Bearbeitungssystem bereitzustellen, mit dem jeweils die Herstellung einer Toleranzausgleichsscheibe in verbesserter Weise möglich ist.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Verfahren zur Herstellung einer Toleranzausgleichsscheibe mit folgenden Verfahrensschritten vorgesehen:
- Ermitteln einer Relativposition einer Innenkontur einer in einem ersten Bauteil ausgebildeten ersten Durchgangsöffnung relativ zu einer Innenkontur einer in einem zweiten Bauteil ausgebildeten zweiten Durchgangsöffnung, wobei die erste und die zweite Durchgangsöffnung übereinander angeordnet sind;
- Positionieren einer Bohrvorrichtung relativ zu einem eine der Innenkontur der zweiten Durchgangsöffnung entsprechende Außenkontur aufweisenden Toleranzausgleichsscheiben-Halbzeug derart, dass die Position der Bohrvorrichtung relativ zu der Außenkontur der ermittelten Position der Innenkontur der ersten Durchgangsöffnung entspricht; und
- Ausbilden einer Scheibendurchgangsöffnung in dem Toleranzausgleichsscheiben-Halbzeug mittels der Bohrvorrichtung.

Erfindungsgemäß erfolgt demnach zunächst eine Vermessung einer relativen Positionierung einer ersten Durchgangsöffnung eines ersten Bauteils relativ zu einer zweiten Durchgangsöffnung eines zweiten Bauteils. Die Durchgangsöffnungen sind hierbei übereinander angeordnet. Hierunter ist insbesondere zu verstehen, dass die erste Durchgangsöffnung in Bezug auf eine radiale Richtung innerhalb der Innenkontur der zweiten Durchgangsöffnung angeordnet ist, wobei sich hierbei insbesondere auch ein Berührungsbereich ergeben kann, in welchem die Innenkonturen in einer sich quer zu der radialen Richtung erstreckenden axialen Richtung fluchten. Weiterhin können die Durchgangsöffnungen in Bezug auf die radiale Richtung auch überlappend angeordnet sein. Die gemessene bzw. ermittelte Relativposition der Durchgangsöffnungen zueinander wird als Eingangsgröße zur Positionierung einer Bohrvorrichtung relativ zu einem Toleranzausgleichsscheiben-Halbzeug verwendet. Das Toleranzausgleichsscheiben-Halbzeug weist eine Außenkontur auf, welche der Innenkontur der zweiten Durchgangsöffnung entspricht, sodass das Toleranzausgleichsscheiben-Halbzeug spielfrei in die zweite Durchgangsöffnung einsetzbar ist. Die Positionierung der Bohrvorrichtung relativ zu dem Toleranzausgleichsscheiben-Halbzeug erfolgt derart, dass die Position der Bohrvorrichtung, insbesondere eines Bohraufsatzes, welcher z.B. eine der Innenkontur der ersten Durchgangöffnung entsprechende Außenkontur aufweist, der ermittelten Relativposition der ersten Durchgangsöffnung zu der zweiten Durchgangsöffnung entspricht. Nach der Positionierung der Bohrvorrichtung wird in das Toleranzausgleichsscheiben-Halbzeug eine Scheibendurchgangsöffnung eingebracht und damit die Toleranzausgleichsscheibe aus dem Toleranzausgleichsscheiben-Halbzeug gebildet. Somit wird aus der ermittelten Relativposition eine Positionierungsvorgabe für die Bohrvorrichtung gewonnen. Dies bietet den Vorteil, dass die Position der Scheibendurchgangsöffnung individuell an die Relativposition der Bauteile zueinander angepasst wird. Damit kann auf in das Toleranzausgleichselement integrierte Einstellmechanismen zur Anpassung der Position der Scheibendurchgangsöffnung verzichtet werden. Die individuelle Ausbildung der Scheibendurchgangsöffnung aufgrund der ermittelten Relativposition der Bauteile bietet weiterhin den Vorteil, dass die Positionierung der Bauteile zueinander in einem relativ großen Toleranzfeld möglich ist. Insbesondere kann während der Montage auf eine Nachbearbeitung der zu verbindenden Bauteile verzichtet werden. Dadurch wird die Entstehung von Stäuben bei der Nachbearbeitung vermieden.

Gemäß einer vorteilhaften Weiterbildung des Verfahrens umfasst der Schritt des Ermittelns der Position der Innenkontur der ersten Durchgangsöffnung relativ zu der Innenkontur der zweiten Durchgangsöffnung ferner ein optisches Erfassen von Positionsdaten der Innenkonturen und ein Berechnen der Position der Innenkontur der ersten Durchgangsöffnung relativ zu der Innenkontur der zweiten Durchgangsöffnung aus den erfassten Positionsdaten. Eine optische Erfassung der Relativposition der Innenkonturen der Durchgangsöffnungen ist vorteilhaft auf einfache Weise durchführbar. Insbesondere kann auf diese Weise ein Datensatz generiert werden, der ohne größere technische Schwierigkeiten weiterverarbeitbar ist.

Der Schritt des optischen Erfassens von Positionsdaten kann insbesondere die Aufnahme eines Pixelbildes mittels einer Digitalkamera umfassen. In dem erfassten Pixelbild weisen die Innenkonturen bzw. die diese umgebenden Oberflächen der Bauteile sich unterscheidende Helligkeitswerte auf. Damit ermöglicht diese Weiterbildung des Verfahrens vorteilhaft die Berechnung der Relativposition der Innenkonturen der Durchgangsbohrungen zueinander aus den Helligkeitswerten der Pixel des Pixelbilds. Durch Einstellung der Auflösung des Pixelbilds kann auf einfache Weise ein optimaler Kompromiss zwischen Genauigkeit der Positionsermittlung und der Geschwindigkeit der Berechnung gefunden werden.

Gemäß einer weiteren vorteilhaften Ausführungsform ist vorgesehen, dass die Innenkontur der ersten Durchgangsöffnung und die Innenkontur der zweiten Durchgangsöffnung jeweils kreisförmig ausgebildet werden und der Schritt des Berechnens der Position der Innenkontur der ersten Durchgangsöffnung relativ zu der Innenkontur der zweiten Durchgangsöffnung aus den erfassten Positionsdaten das Berechnen eines minimalen Abstands zwischen der Innenkontur der ersten Durchgangsöffnung und Innenkontur der zweiten Durchgangsöffnung umfasst. Demgemäß wird die zweite Durchgangsöffnung rotationssymmetrisch ausgebildet. Die Position der Innenkontur der ersten Durchgangsöffnung relativ zu der Innenkontur der zweiten Durchgangsöffnung ist damit eindeutig durch den minimalen Abstand festgelegt. Die Berechnung des minimalen Abstands kann auf besonders einfache Weise, beispielsweise aus den Helligkeitswerten des Pixelbildes, erfolgen.

Nach einer hierzu alternativen Ausführungsform umfasst der Schritt des Berechnens der Position der Innenkontur der ersten Durchgangsöffnung relativ zu der Innenkontur der zweiten Durchgangsöffnung aus den erfassten Positionsdaten das Berechnen eines ersten Abstands zwischen einem ersten Punkt der Innenkontur der ersten Durchgangsöffnung und einem ersten vorbestimmten Punkt der Innenkontur der zweiten Durchgangsöffnung, das Berechnen eines zweiten Abstands zwischen einem zweiten Punkt der Innenkontur der ersten Durchgangsöffnung und einem zweiten vorbestimmten Punkt der Innenkontur der zweiten Durchgangsöffnung sowie das Berechnen eines dritten Abstands zwischen einem dritten vorbestimmten Punkt der Innenkontur der zweiten Durchgangsöffnung und einem dritten Punkt der Innenkontur der ersten Durchgangsöffnung. Dadurch wird eine die relative Position der Innenkonturen zueinander eindeutig festlegende geometrische Stützkonstruktion gebildet. Somit kann die Berechnung der Position mit besonders großer Zuverlässigkeit unabhängig davon erfolgen, ob die Innenkonturen rotationssymmetrisch ausgebildet sind.

Der dritte Punkt der Innenkontur der ersten Durchgangsöffnung kann insbesondere identisch mit dem ersten oder dem zweiten Punkt der Innenkontur der ersten Durchgangsöffnung sein. Alternativ hierzu kann der dritte vorbestimmte Punkt der Innenkontur der zweiten Durchgangsöffnung identisch mit dem ersten oder dem zweiten vorbestimmten Punkt der Innenkontur der zweiten Durchgangsöffnung sein. Auf diese Weise wird jeweils eine eindeutige geometrische Stützung der Innenkontur der ersten Durchgangsöffnung durch insgesamt weniger Punkte erzielt. Dadurch wird der Rechenaufwand vorteilhaft verringert.

Gemäß einer besonders vorteilhaften Weiterbildung des Verfahrens werden das Toleranzscheiben-Halbzeug und die Bohrvorrichtung in einem hermetisch abgeschlossenen Arbeitsraum einer Bearbeitungskammer angeordnet. Damit findet der zerspanende Vorgang der Ausbildung der Scheibendurchgangsöffnung in einem luftdicht abgeschlossenen Raum statt. Damit wird verhindert, dass Späne und/oder Bohrstaub sich in unkontrollierter Weise verteilen.

Gemäß einem zweiten Aspekt der Erfindung ist ein Bearbeitungssystem zur Herstellung einer Toleranzausgleichsscheibe vorgesehen. Das Bearbeitungssystem weist eine Bearbeitungskammer mit einem hermetisch abschließbaren Arbeitsraum, eine in dem Arbeitsraum mittels einer Positioniervorrichtung bewegbar angeordnete Bohrvorrichtung zum Ausbilden einer Scheibendurchgangsöffnung in einem Toleranzausgleichsscheiben-Halbzeug, eine Fixiervorrichtung zum Fixieren des Toleranzausgleichsscheiben- Halbzeugs und eine funktional an die Positioniervorrichtung gekoppelten optischen Messvorrichtung auf. Die Messvorrichtung ist dazu eingerichtet, eine Relativposition einer Innenkontur einer in einem ersten Bauteil ausgebildeten ersten Durchgangsöffnung relativ zu einer Innenkontur einer in einem zweiten Bauteil ausgebildeten zweiten Durchgangsöffnung zu ermitteln, wobei die erste und die zweite Durchgangsöffnung übereinander angeordnet sind. Das Toleranzausgleichsscheiben-Halbzeug weist eine der Innenkontur der zweiten Durchgangsöffnung entsprechende Außenkontur auf. Die Bohrvorrichtung ist mittels der Positioniervorrichtung aufgrund von mittels der optischen Messvorrichtung erfassten Positionsdaten relativ zu dem Toleranzausgleichsscheiben-Halbzeug, wenn dieses mittels der Fixiervorrichtung fixiert ist, derart positionierbar, dass die Position der Bohrvorrichtung relativ zu der Außenkontur der ermittelten Position der Innenkontur der ersten Durchgangsöffnung entspricht.

Erfindungsgemäß ist somit ein Bearbeitungssystem mit einem luftdicht abschließbaren Arbeitsraum vorgesehen, in dem eine Bohrvorrichtung angeordnet ist. Dies bietet den Vorteil, dass zuverlässig verhindert wird, dass sich Bohrstaub in unerwünschter Weise in der Umgebung verteilt. Die Bohrvorrichtung ist weiterhin mittels einer Positioniervorrichtung, welche z.B. als ein Linearaktuator oder dergleichen ausgeführt sein kann, relativ zu einer zum Halten der Toleranzausgleichsscheibe vorgesehenen Fixiervorrichtung positionierbar bzw. bewegbar. Die Positioniervorrichtung ist funktional an eine optische Messvorrichtung gekoppelt, das heißt, es besteht eine Kommunikationsverbindung zwischen der Messvorrichtung und der Positioniervorrichtung zumindest derart, dass von der Messvorrichtung erfasste Messdaten direkt oder in einer weiterverarbeiteten Form an die Positioniervorrichtung übertragen werden können. Die optische Erfassung von Positionsdaten lässt sich vorteilhaft mit hoher Genauigkeit unter Verwendung mit einfacher technischer Mittel durchführen. Die funktionale Rückkopplung der optischen Messvorrichtung an die Positioniervorrichtung ermöglicht einen automatisierten Verfahrensablauf. Damit wird die Verfahrenseffizienz gesteigert. Auch erleichtert dies die Ausbildung einer Bohrung in einem Halbzeug in dem hermetisch geschlossenen Arbeitsraum.

Die funktionale Verbindung zwischen der Messvorrichtung und der Positioniervorrichtung kann beispielsweise durch eine Datenübertragungsleitung, eine drahtlose Datenübertragungsverbindung oder dergleichen realisiert werden.

Das Bearbeitungssystem kann insbesondere zur Durchführung des oben beschriebenen Verfahrens vorteilhaft verwendet werden. Die zum Verfahren offenbarten Aspekte gelten damit in analoger Weise auch für das Bearbeitungssystem und umgekehrt.

Nach einer vorteilhaften Ausführungsform ist vorgesehen, dass die Bearbeitungskammer eine öffen- und schließbare Zugangsklappe aufweist. Durch diese kann eine hergestellte Toleranzausgleichsscheibe entnommen werden. Insbesondere kann die Zugangsklappe derart gestaltet sein, dass diese eine Entnahmeöffnung der Bearbeitungskammer in einer geschlossenen Stellung der Zugangsklappe hermetisch abdichtet.

Gemäß einer besonders bevorzugten Ausführungsform weist die Bearbeitungskammer einen Entnahmeraum auf, welcher durch eine mittels einer Abdeckeinrichtung abdeckbaren Verbindungsöffnung mit dem Arbeitsraum verbunden ist und eine durch die Zugangsklappe verschließbare Entnahmeöffnung aufweist. Auf diese Weise wird eine Art Staubfang oder Schleuse gebildet. Der Entnahmeraum kann insbesondere einen Teilraum der Bearbeitungskammer bilden, welcher durch die Verbindungsöffnung mit dem Arbeitsraum verbunden ist. Gegenüber dem Arbeitsraum ist der Entnahmeraum mittels der Abdeckeinrichtung abdichtbar, insbesondere hermetisch abdichtbar. Die Zugangsklappe bildet einen Zugang von außen in den Entnahmeraum. Auf diese Weise wird vorteilhaft die Möglichkeit geschaffen, eine in dem Arbeitsraum erzeugte Toleranzausgleichsscheibe bei geschlossener Zugangsklappe durch die von der Abdeckeinrichtung freigegebene Verbindungsöffnung in den Entnahmeraum zu fördern und nach Schließen der Verbindungsöffnung die Zugangsklappe zu öffnen und die Toleranzausgleichsscheibe zu entnehmen. Damit wird eine fluidleitende Verbindung zwischen der Umgebung und dem Arbeitsraum vermieden. Auf diese Weise wird mit besonders hoher Zuverlässigkeit der Austritt von Bohrstaub aus dem Arbeitsraum verhindert.

Gemäß einer weiteren vorteilhaften Weiterbildung weist das Bearbeitungssystem, zusätzlich eine erste Absaugeinrichtung auf, mittels welcher Luft aus dem Entnahmeraum in den Arbeitsraum absaugbar ist. Insbesondere ist mittels der Absaugeinrichtung ein Unterdruck gegenüber der Umgebung erzeugbar. Dies führt dazu, dass möglicherweise in dem Entnahmeraum vorhandener Bohrstaub nicht durch die Entnahmeöffnung in die Umgebung entweichen kann, sondern zurück in den Arbeitsraum transportiert wird.

Eine weitere vorteilhafte Weiterbildung des Bearbeitungssystem sieht vor, dass dieses zusätzlich ein in dem Arbeitsraum angeordnetes Magazin zur Aufnahme einer vorbestimmten Anzahl von Toleranzausgleichsscheiben-Halbzeugen und eine Transportvorrichtung zum Transport der Toleranzausgleichsscheiben-Halbzeuge aus dem Magazin heraus aufweist. Auf diese kann der Automatisierungsgrad der Herstellung der Toleranzausgleichsscheibe weiter erhöht werden. Weiterhin wird durch die Anordnung des Magazins innerhalb des Arbeitsraum die Anzahl der notwendigen Öffnungsvorgänge des Arbeitsraums verringert, wodurch die Gefahr des Austritts von Bohrstaub ebenfalls vorteilhaft verringert wird.

Besonders bevorzugt kann die Transportvorrichtung derart ausgebildet sein, dass diese einen direkten Transport des Toleranzausgleichsscheiben-Halbzeugs aus dem Magazin heraus und hin zu der Fixiervorrichtung ermöglicht. Alternativ hierzu kann die Fixiervorrichtung dazu ausgebildet sein, ein Toleranzausgleichsscheiben-Halbzeug zu entnehmen, beispielsweise mit Hilfe einer Greifeinrichtung oder dergleichen.

Gemäß einer weiteren vorteilhaften Ausführungsform weist die optische Messvorrichtung eine Digitalkamera auf. Mit einer Digitalkamera können insbesondere auf einfache Weise Pixelbilder aufgenommen werden. Dies bietet den Vorteil, dass aus diesen Positionsdaten durch Analyse der Helligkeitswerte der einzelnen Pixel des Pixelbildes besonders effizient gewonnen werden können.

Die mittels der optischen Messvorrichtung erfassbaren Messdaten können insbesondere an eine Steuerungsvorrichtung weitergegeben werden, welche eine Recheneinrichtung, z.B. in Form eines Prozessors, und einen Datenspeicher, insbesondere einen nicht-flüchtigen computerlesbaren Speicher, aufweist. Die Steuerungsvorrichtung kann insbesondere Teil der Positionierungsvorrichtung sein oder funktional mit der Positionierungsvorrichtung verbunden sein. Auf dem Datenspeicher der Steuerungsvorrichtung ist bevorzugt ein Programm gespeichert, welches die Recheneinrichtung zur Durchführung der Schritte des oben beschriebenen Verfahrens veranlasst. Insbesondere veranlasst die Recheneinrichtung die Erzeugung von Kommandosignalen, durch welche die Komponenten des Bearbeitungssystems betätigt werden.

Gemäß einer weiteren vorteilhaften Weiterbildung weist die optische Messvorrichtung weiterhin ein Positioniergehäuse mit einer Öffnung zur Positionierung an einer Bauteiloberfläche auf, wobei die Digitalkamera an einer der Öffnung zugewandten Wandung des Positioniergehäuses angeordnet ist. Das Positioniergehäuse weist demgemäß insbesondere eine Öffnung auf, welche zur Positionierung an einer Bauteiloberfläche vorgesehen ist. Die Digitalkamera ist innerhalb des Positioniergehäuses derart angeordnet, dass durch die Öffnung des Positioniergehäuses hindurch ein Pixelbild erfassbar ist. Diese Anordnung bietet den Vorteil, dass durch das Positioniergehäuse für eine durchzuführende Vermessung stets ein einheitlicher Abstand zwischen der Digitalkamera und dem Bauteil erzielt wird. Auch kann bei einem geschlossenen Gehäuse stets eine annähernd gleiche Belichtung erzielt werden. Damit wird die Genauigkeit des Verfahrens verbessert. Weiterhin wird die Digitalkamera durch das Positioniergehäuse vor äußeren Einflüssen geschützt.

Ein weiterer Aspekt der Erfindung betrifft die Verwendung eines Bearbeitungssystems nach einer der voranstehend beschriebenen Ausführungsformen in einem Montageraum, in welchem ein Zusammenbau eines Luftfahrzeugs stattfindet. Auf diese Weise wird die Herstellung einer Toleranzausgleichsscheibe, z.B. mittels des oben beschriebenen Verfahrens, während der Montage eine Luftfahrzeugs in ein und demselben Montageraum ermöglicht. Dies bietet den Vorteil, dass die Toleranzausgleichsscheiben direkt vor Ort individuell fertigbar sind. Insbesondere durch die hermetische Abschließbarkeit des Arbeitsraums wird verhindert, dass sich unerwünschter Bohrstaub in dem Montageraum verteilt.

Der Montageraum kann beispielsweise durch eine Montagehalle oder allgemein durch einen gedachten Umraum um eine Montagestelle des Luftfahrzeugs gebildet sein. In letztgenanntem Fall wird eine Grenze des Umraums durch einen minimalen Abstand definiert, in welchem gemäß einer Montagebedingung kein Bohrstaub auftreten soll.

Unter dem Zusammenbau des Luftfahrzeugs wird insbesondere eine Endmontage des Luftfahrzeugs verstanden. Hiervon ist insbesondere ein Zusammenfügen von Strukturbauteilen, eine Installation von hydraulischen Systemen, elektrischen Systeme, Klimasystemen oder dergleichen umfasst.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig.1: eine schematische Darstellung eines Ablaufdiagramms eines Verfahrens gemäß einem bevorzugten Ausführungsbeispiel der vorliegenden Erfindung;
- Fig. 2: eine schematische Darstellung beispielhafter geometrischer Verhältnisse an jeweils eine Durchgangsöffnung aufweisenden Bauteilen während eines Schritts des Erfassens Ermittelns einer Relativposition der Durchgangsöffnungen;
- Fig. 3: eine schematische Ansicht eines Bearbeitungssystems gemäß einem bevorzugten Ausführungsbeispiel der vorliegenden Erfindung sowie eine Verwendung des Bearbeitungssystems gemäß einem Ausführungsbeispiel der vorliegenden Erfindung;
- Fig. 4: eine Draufsicht auf ein Toleranzausgleichsscheiben-Halbzeug gemäß einem Ausführungsbeispiel der vorliegenden Erfindung vor einer Ausbildung einer Scheibendurchgangsöffnung;
- Fig. 5: eine Draufsicht auf eine aus dem in Fig. 4 gezeigten Toleranzausgleichsscheiben-Halbzeug hergestellte Toleranzausgleichsscheibe;
- Fig. 6: eine Draufsicht auf ein Toleranzausgleichsscheiben-Halbzeug gemäß einem weiteren Ausführungsbeispiel der vorliegenden Erfindung vor einer Ausbildung einer Scheibendurchgangsöffnung;
- Fig. 7: eine Draufsicht auf eine aus dem in Fig. 6 gezeigten Toleranzausgleichsscheiben-Halbzeug hergestellte Toleranzausgleichsscheibe; und
- Fig.8: eine schematische Schnittansicht einer Bauteilanordnung mit einer Toleranzausgleichsscheibe gemäß einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

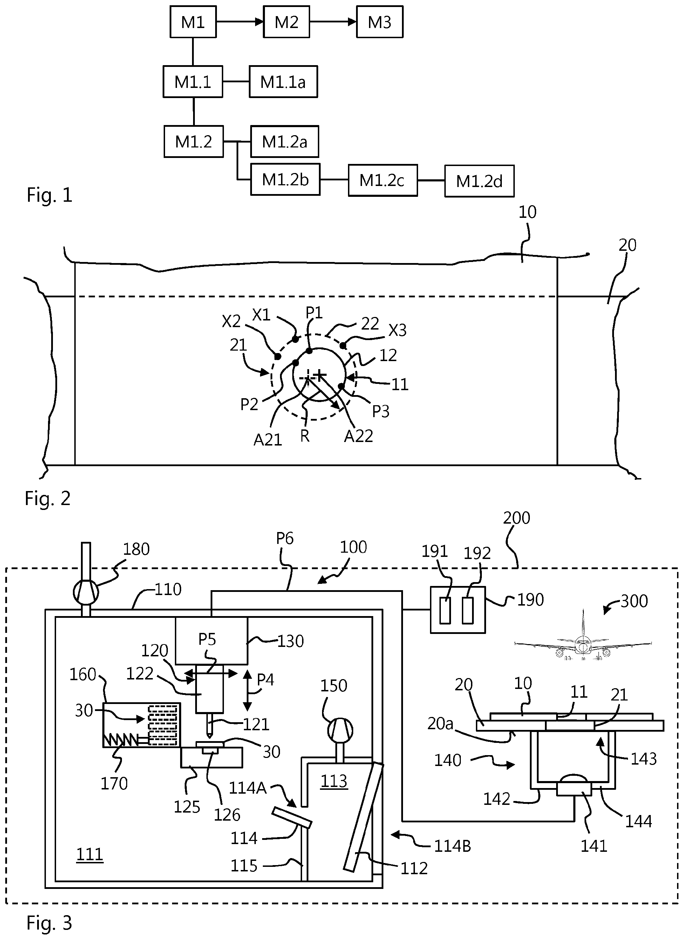

Fig. 1 zeigt schematisch ein Verfahren zur Herstellung einer Toleranzausgleichsscheibe als Ablaufdiagramm. Demnach erfolgt zunächst ein Ermitteln M1 einer Relativposition einer Innenkontur 12 einer in einem ersten Bauteil 10 ausgebildeten ersten Durchgangsöffnung 11 relativ zu einer Innenkontur 22 einer in einem zweiten Bauteil 20 ausgebildeten zweiten Durchgangsöffnung 21.

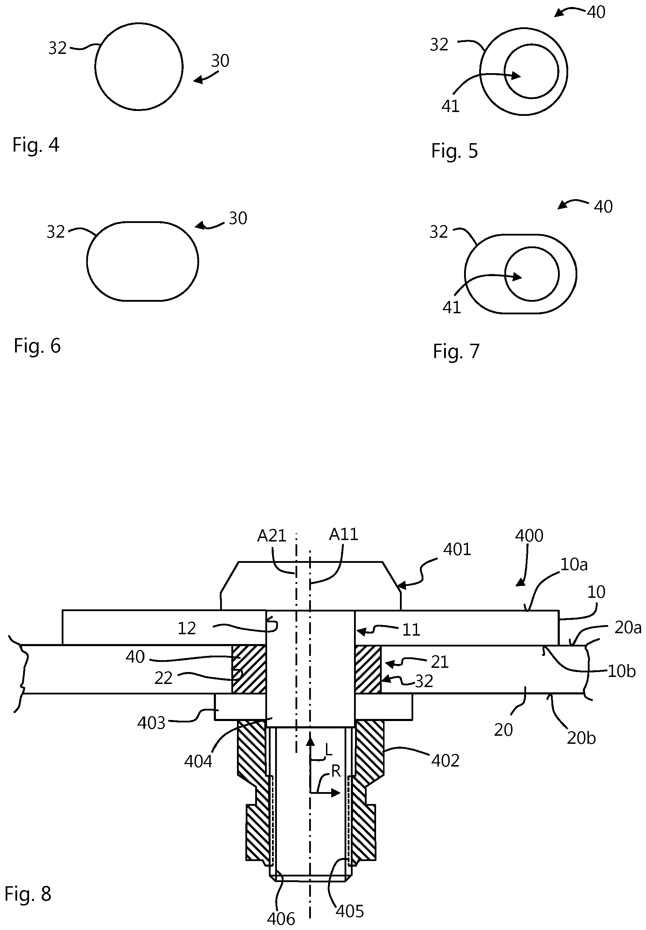

Fig. 2 zeigt beispielhaft und schematisch eine relative Anordnung des ersten Bauteils 10 und des zweiten Bauteils 20 während des ersten Schritts M1 des Verfahrens. Das erste und das zweite Bauteil 10, 20 sind hierbei überlappend angeordnet. Das erste Bauteil 10 weist die erste Durchgangsöffnung 11 und das zweite Bauteil 20 die zweite Durchgangsöffnung 21 auf. Wie in Fig. 8 gezeigt ist, erstreckt sich die die erste Durchgangsöffnung 11 definierende Innenkontur 12 zwischen einer ersten Oberfläche 10a des ersten Bauteils 10 und einer entgegengesetzt zu dieser orientierten zweiten Oberfläche 10b des ersten Bauteils 10. Die die zweite Durchgangsöffnung 21 definierende Innenkontur 22 erstreckt sich, wie ebenfalls in Fig. 8 gezeigt ist, zwischen einer ersten Oberfläche 20a des zweiten Bauteils 10 und einer entgegengesetzt zu dieser orientierten zweiten Oberfläche 20b des zweiten Bauteils 10. Wie in Fig. 2 weiterhin gezeigt ist, sind die erste Durchgangsöffnung 11 und die zweite Durchgangsöffnung 21 während des Schritts M1 des Ermittelns der Relativposition der Innenkonturen 12, 22 der Durchgangsöffnungen 11, 21 zueinander übereinander angeordnet. Fig. 2 zeigt beispielhaft eine Anordnung der Bauteile 10, 20 relativ zueinander, bei welcher die erste Durchgangsöffnung 11 in Bezug auf eine radiale Richtung R der zweiten Durchgangsöffnung 21 innerhalb der Innenkontur 22 der zweiten Durchgangsöffnung 21 angeordnet ist. Beispielhaft ist in Fig. 2 weiterhin gezeigt, dass eine Mittelachse A11 der ersten Durchgangsöffnung 11 in Bezug auf die radiale Richtung versetzt zu einer Mittelachse A21 der zweiten Durchgangsöffnung 21 angeordnet ist. Der Schritt des Ermittelns M1 der Position der Innenkontur 12 der ersten Durchgangsöffnung 11 relativ zu der Innenkontur 22 der zweiten Durchgangsöffnung 21 kann insbesondere, wie in Fig. 3 gezeigt, mittels einer optischen Messvorrichtung 140 durchgeführt werden, welche im Folgenden noch genauer beschrieben wird.

Wie in Fig. 1 schematisch gezeigt ist, kann der Schritt des Ermittelns M1 der Position der Innenkontur 12 der ersten Durchgangsöffnung 11 relativ zu der Innenkontur 22 der zweiten Durchgangsöffnung 21 insbesondere ein optisches Erfassen M1.1 von Positionsdaten der Innenkonturen 12, 22 und ein Berechnen M1.2 der Position der Innenkontur 12 der ersten Durchgangsöffnung 11 relativ zu der Innenkontur 22 der zweiten Durchgangsöffnung 21 aus den erfassten Positionsdaten umfassen.

Wie Fig. 1 außerdem zeigt, kann der Schritt des optisches Erfassens von Positionsdaten M1.1 die Aufnahme Ml.la eines Pixelbildes mittels einer Digitalkamera 141 umfassen. Die Durchführung des Schritts der Aufnahme Ml.la des Pixelbildes ist in Fig. 3 schematisch dargestellt.

Fig. 1 zeigt weiterhin, dass der Schritt des Berechnens M1.2 der Position der Innenkontur 12 der ersten Durchgangsöffnung 11 relativ zu der Innenkontur 22 der zweiten Durchgangsöffnung 21 aus den erfassten Positionsdaten zwei alternative Möglichkeiten umfasst.

In dem Fall, dass die Innenkontur 12 der ersten Durchgangsöffnung 11 und die Innenkontur 22 der zweiten Durchgangsöffnung 21 jeweils kreisförmig ausgebildet werden, wie dies beispielhaft in Fig. 2 dargestellt ist, kann der Schritt des Berechnens M1.2 der Position der Innenkontur 12 der ersten Durchgangsöffnung 11 relativ zu der Innenkontur 22 der zweiten Durchgangsöffnung 21 aus den erfassten Positionsdaten insbesondere das Berechnen M1.2a eines minimalen Abstands zwischen der Innenkontur 12 der ersten Durchgangsöffnung 11 und der Innenkontur 22 der zweiten Durchgangsöffnung 21 umfassen. Dieser minimale Abstand kann beispielsweise aus dem Pixelbild mittels eines Bildverarbeitungsverfahrens ermittelt werden. Hierbei werden die Helligkeitswerte der Pixel beispielsweise mit Referenzhelligkeitswerten oder mit Helligkeitswerten benachbarter Pixel verglichen. Liegt der Unterschied der Helligkeitswerte der Pixel innerhalb eines vorbestimmten Wertebereichs, gibt die jeweilige Pixelposition innerhalb des Pixelbildes die Position eines Bereichs der Innenkontur 12 der ersten Durchgangsöffnung 11 oder der der Innenkontur 22 der zweiten Durchgangsöffnung 21 an. Durch Ermittlung des minimalen Abstands zwischen den die Innenkontur 12 der ersten Durchgangsöffnung 11 repräsentierenden Pixeln und den die Innenkontur 22 der zweiten Durchgangsöffnung 21 repräsentierenden Pixeln kann auf die Relativposition der Innenkonturen 12, 22 zueinander geschlossen werden.

Für den allgemeinen Fall, dass zumindest eine der Innenkonturen 12, 22 nicht rotationssymmetrisch ausgebildet wird, kann der Schritt des Berechnens M1.2 der Position der Innenkontur 12 der ersten Durchgangsöffnung 11 relativ zu der Innenkontur 22 der zweiten Durchgangsöffnung 21 aus den erfassten Positionsdaten insbesondere drei Abstandsberechnungen umfassen. Wie in den Fig. 1 und 2 beispielhaft gezeigt ist, erfolgt ein Berechnen M1.2b eines ersten Abstands zwischen einem ersten Punkt P1 der Innenkontur 12 der ersten Durchgangsöffnung 11 und einem ersten vorbestimmten Punkt X1 der Innenkontur 22 der zweiten Durchgangsöffnung 21. Weiterhin wird ein zweiter Abstand zwischen einem zweiten Punkt P2 der Innenkontur 12 der ersten Durchgangsöffnung 11 und einem zweiten vorbestimmten Punkt X2 der Innenkontur 22 der zweiten Durchgangsöffnung 21 berechnet, wie in Fig. 1 durch den Schritt M1.2c illustriert. Wie in Fig. 2 gezeigt ist, sind die Punkte X1 und X2 der Innenkontur 22 der zweiten Durchgangsöffnung 21 jeweils voneinander verschieden. Auch sind die Punkte P1 und P2 der Innenkontur 12 der ersten Durchgangsöffnung 11 voneinander verschieden, wie dies ebenfalls in Fig. 2 gezeigt ist. Abschließend erfolgt ein Berechnen M1.2d eines dritten Abstands zwischen einem dritten vorbestimmten Punkt X3 der Innenkontur 22 der zweiten Durchgangsöffnung 21 und einem dritten Punkt P3 der Innenkontur 12 der ersten Durchgangsöffnung 11.

Fig. 2 zeigt beispielhaft, dass der dritte Punkt P3 der Innenkontur 12 der ersten Durchgangsöffnung 11 von dem ersten und dem zweiten Punkt P1, P2 der Innenkontur 12 der ersten Durchgangsöffnung 11 verschieden ist. Auch ist in Fig. 2 gezeigt, dass der dritte vorbestimmte Punkt X3 der Innenkontur 22 der zweiten Durchgangsöffnung 21 von dem ersten und dem zweiten vorbestimmten Punkt X1, X2 der Innenkontur 22 der zweiten Durchgangsöffnung 21 verschieden ist. Optional kann jedoch vorgesehen sein, dass der dritte Punkt P3 der Innenkontur 12 der ersten Durchgangsöffnung 11 identisch mit dem ersten oder dem zweiten Punkt P1, P2 der Innenkontur 12 der ersten Durchgangsöffnung 11 ist. Alternativ hierzu kann auch der dritte vorbestimmte Punkt X3 der Innenkontur 22 der zweiten Durchgangsöffnung 21 identisch mit dem ersten oder dem zweiten vorbestimmten Punkt X1, X2 der Innenkontur 22 der zweiten Durchgangsöffnung 21 sein.

Wie Fig. 1 schematisch zeigt, erfolgt nach der Ermittlung M1 der Relativposition der Innenkonturen 12, 22 zueinander ein Positionieren M2 einer Bohrvorrichtung 120 relativ zu einem Toleranzausgleichsscheiben-Halbzeug 30. Dies ist in Fig. 3 beispielhaft für eine Bohrvorrichtung 120 eines im Folgenden noch genauer beschriebenen Bearbeitungssystems 100 gezeigt. Das Toleranzausgleichsscheiben-Halbzeug 30 weist insbesondere eine der Innenkontur 22 der zweiten Durchgangsöffnung 21 entsprechende Außenkontur 32 auf. Das Positionieren M2 erfolgt hierbei derart, dass die Position der Bohrvorrichtung 120 relativ zu der Außenkontur 32 des Toleranzausgleichsscheiben-Halbzeugs 30 der ermittelten Position der Innenkontur 12 der ersten Durchgangsöffnung 11 entspricht.

Nach dem Schritt des Positionierens M2 erfolgt das Ausbilden M3 einer Scheibendurchgangsöffnung 41 in dem Toleranzausgleichsscheiben-Halbzeug 30 mittels der Bohrvorrichtung 120.

Fig. 4 zeigt beispielhaft ein Toleranzausgleichsscheiben-Halbzeug 30 mit einer kreisförmigen Außenkontur 32 vor dem Ausbilden M3 der Scheibendurchgangsöffnung 41. Fig. 5 zeigt eine aus dem in Fig. 4 gezeigten Toleranzausgleichsscheiben-Halbzeug 30 gebildete Toleranzausgleichsscheibe 40 mit der im Schritt M3 ausgebildeten Scheibendurchgangsöffnung 41. Aufgrund der Positionierung M2 der Bohrvorrichtung 120 relativ zu der Außenkontur 32 des Toleranzausgleichsscheiben-Halbzeug 30 entsprechend der Relativposition der Innenkonturen 12, 22 der Durchgangsöffnungen 11, 21 entspricht die Relativposition der Scheibendurchgangsöffnung 41 relativ zu der Außenkontur 32 der Relativposition der Innenkonturen 12 der ersten Durchgangsöffnung 11 zu der Innenkonturen 22 der zweiten Durchgangsöffnung 21.

Fig. 6 zeigt beispielhaft ein Toleranzausgleichsscheiben-Halbzeug 30 mit einer nicht rotationssymmetrischen, Außenkontur 32 vor dem Ausbilden M3 der Scheibendurchgangsöffnung 41. Das in Fig. 6 gezeigte Toleranzausgleichsscheiben-Halbzeug 30 weist insbesondere eine rechteckförmige Außenkontur 32 mit abgerundeten Ecken auf. Fig. 7 zeigt eine aus dem in Fig. 6 gezeigten Toleranzausgleichsscheiben-Halbzeug 30 gebildete Toleranzausgleichsscheibe 40 mit der im Schritt M3 ausgebildeten Scheibendurchgangsöffnung 41. Aufgrund der Positionierung M2 der Bohrvorrichtung 120 relativ zu der Außenkontur 32 des Toleranzausgleichsscheiben-Halbzeug 30 entsprechend der Relativposition der Innenkonturen 12, 22 der Durchgangsöffnungen 11, 21 entspricht die Relativposition der Scheibendurchgangsöffnung 41 relativ zu der Außenkontur 32 der Relativposition der Innenkonturen 12 der ersten Durchgangsöffnung 11 zu der Innenkonturen 22 der zweiten Durchgangsöffnung 21.

Wie Fig. 2 beispielhaft zeigt, kann das Toleranzscheiben-Halbzeug 30 und die Bohrvorrichtung 120 während der Schritte des Positionierens M2 der Bohrvorrichtung M2 und der Ausbildung M3 der Scheibendurchgangsbohrung 41 in einem hermetisch abgeschlossenen Arbeitsraum 111 einer Bearbeitungskammer 110 angeordnet werden.

Fig. 8 zeigt beispielhaft eine Bauteilanordnung 400, welche die durch das vorbeschriebene Verfahren gebildete Toleranzausgleichsscheibe 40, das erste Bauteil 10, das zweite Bauteil 20 sowie einen Verbindungsbolzen 401 aufweist. Wie Fig. 8 zeigt, kann weiterhin ein Bolzenfixierungselement 402 sowie eine Anlagescheibe 403 vorgesehen sein.

Wie in Fig. 8 gezeigt ist, erstreckt sich ein Schaft 404 des Bolzens 401 durch die erste und die zweite Durchgangsöffnung 11, 21 hindurch. Insbesondere kann optional vorgesehen sein, dass der Schaft 404 an der Innenkontur 12 der ersten Durchgangsöffnung 11 anliegt, wie dies beispielhaft in Fig. 8 dargestellt ist. Die Toleranzausgleichsscheibe 40 ist in der zweiten Durchgangsöffnung 21 angeordnet und liegt mit deren Außenkontur 32 an der Innenkontur 22 der zweiten Durchgangsöffnung 21 an. Der Schaft 404 des Bolzens 401 erstreckt sich dabei durch die Scheibendurchgangsöffnung 41 und liegt insbesondere an dieser an. Dadurch wird mittels der Toleranzausgleichsscheibe 40 ein Spiel zwischen dem Schaft 401 und der Innenkontur 22 der zweiten Durchgangsöffnung 21 ausgeglichen. Wie Fig. 8 beispielhaft zeigt, kann hierbei auch ein Spiel ausgeglichen werden, wenn die Mittelachse A11 der ersten Durchgangsöffnung 11 in Bezug auf die radiale Richtung R versetzt zu der Mittelachse A21 der zweiten Durchgangsöffnung 21 angeordnet ist, da die Scheibendurchgangsöffnung 41, wie oben beschrieben, entsprechend der Relativposition der Innenkonturen 12, 22 der Durchgangsöffnungen 11, 21 der Bauteile 10, 20 ausgebildet wurde.

Wie in Fig. 8 weiterhin gezeigt ist, kann der Bolzen 401 in Bezug auf eine Längsrichtung L mittels des Bolzensicherungselements 402 fixiert werden. In Fig. 8 ist das Bolzensicherungselement 402 beispielhaft als eine Hülse ausgebildet, welche ein Innengewinde 405 aufweist. Zur Fixierung ist das Bolzensicherungselement 402 mit dessen Innengewinde 405 auf ein an dem Schaft 404 des Bolzens 401 ausgebildetes Außengewinde 406 aufgeschraubt. Die optionale Zwischenscheibe 403 kann insbesondere, wie in Fig. 8 gezeigt, in Bezug auf die Längsrichtung L zwischen dem zweiten Bauteil 20 und dem Bolzensicherungselement 402 angeordnet sein.

Fig. 3 zeigt schematisch ein Bearbeitungssystem 100 zur Herstellung der Toleranzausgleichsscheibe 40. Insbesondere ist das in Fig. 3 gezeigte und im Folgenden beschriebene Bearbeitungssystem 100 zur Durchführung des oben beschriebenen Verfahrens geeignet. Die zum Verfahren offenbarten Aspekte gelten somit in analoger Weise auch für das Bearbeitungssystem 100 und umgekehrt.

Wie in Fig. 3 gezeigt, weist das Bearbeitungssystem 100 eine Bearbeitungskammer 110, eine Bohrvorrichtung 120, eine Fixiervorrichtung 125 zum Fixieren der Toleranzausgleichsscheibe 40, eine Positioniervorrichtung 130 zum Positionieren der Bohrvorrichtung 120 und eine optische Messvorrichtung 140 auf. Fig. 3 zeigt weiterhin eine optionale erste Absaugeinrichtung 150, ein optionales Magazin 160 zur Aufnahme von Toleranzausgleichsscheiben-Halbzeugen 30, eine optionale Transportvorrichtung 170, sowie eine optionale zweite Absaugeinrichtung 180.

Die Bearbeitungskammer 110 weist einen hermetisch abschließbaren Arbeitsraum 111 auf. Insbesondere ist der Arbeitsraum 111 durch ein abschließbares Gehäuse 111A begrenzt. Die Bohrvorrichtung 120 ist innerhalb des Arbeitsraums 111 angeordnet. In Fig. 3 ist die Bohrvorrichtung 120 lediglich schematisch dargestellt und weist einen Bohraufsatz 121 auf, welcher mittels einer Antriebseinheit 122 zur Ausbildung einer Bohrung drehbar ist. Die Bohrvorrichtung 120 ist mittels der Positioniervorrichtung 130 bewegbar. In Fig. 3 ist dies durch die Pfeile P4 und P5 schematisch angedeutet. Die Positioniervorrichtung 130 kann insbesondere als ein Linearaktuator ausgebildet sein, welcher eine lineare Bewegung der Bohrvorrichtung in allen drei Raumrichtungen ermöglicht. Die Positioniervorrichtung 130 kann insbesondere ebenfalls innerhalb des Arbeitsraums 130 angeordnet sein, wie in Fig. 3 gezeigt.

Die Fixiervorrichtung 125 ist zum Fixieren der Toleranzausgleichsscheibe 40 vorgesehen. Diese kann, wie in Fig. 3 beispielhaft gezeigt ist, insbesondere ortsfest innerhalb des Arbeitsraums 111 angeordnet sein. Grundsätzlich ist auch denkbar, die Fixiervorrichtung 125 mittels einer zweiten Positioniervorrichtung (nicht gezeigt) bewegbar zu gestalten. In Fig. 3 ist die Fixiervorrichtung 125 schematisch als Block gezeigt, welcher eine Ausnehmung 126 als Auslauf für den Bohraufsatz 121 der Bohrvorrichtung aufweist. Ein Toleranzausgleichsscheiben-Halbzeug 30 kann beispielsweise mittels einer Halteeinrichtung (nicht gezeigt) der Fixiervorrichtung 125, z.B. in Form einer Klammer oder dergleichen, fixiert werden.

Das optionale Magazin 160 dient der Aufnahme von Toleranzausgleichsscheiben-Halbzeugen 30 und ist ebenfalls in dem Arbeitsraum 111 angeordnet, wie Fig. 3 zeigt. Die Transportvorrichtung 170 ist in Fig. 3 beispielhaft als eine Feder dargestellt, mittels derer einzelne Toleranzausgleichsscheiben-Halbzeuge 30 aus dem Magazin 160 herausschiebbar sind. Die Transportvorrichtung 170 kann insbesondere derart gestaltet sein, dass diese das jeweilige Toleranzausgleichsscheiben-Halbzeug 30 zu der Fixiervorrichtung 125 transportiert bzw. dieser übergibt.

Die optische Messvorrichtung 140 ist funktional an die Positioniervorrichtung 130 gekoppelt. In Fig. 3 ist dies schematisch durch die Linie P6 illustriert. Die funktionale Kopplung zwischen der Messvorrichtung und der Positioniervorrichtung kann beispielsweise durch eine Datenübertragungsleitung, eine drahtlose Datenübertragungsverbindung, wobei zumindest die Messvorrichtung 140 eine Sendeeinrichtung (nicht gezeigt) und zumindest die Positioniervorrichtung 130 eine Empfangseinrichtung (nicht gezeigt) aufweist, oder dergleichen realisiert werden. Optional kann weiterhin eine Steuerungsvorrichtung 190 vorgesehen sein, welche mit der Messvorrichtung 140 und der Positioniervorrichtung 130 funktional verbunden ist. Die Steuerungsvorrichtung 190 weist insbesondere eine Recheneinrichtung 191, z.B. in Form eines Prozessors, und einen Datenspeicher 192, insbesondere einen nicht-flüchtigen computerlesbaren Speicher, auf.

Mittels der optischen Messeinrichtung 140 sind Positionsdaten erfassbar, z.B. wie in Fig. 3 schematisch dargestellt und oben anhand des Verfahrens beschrieben, die Relativposition der Innenkontur 12 der ersten Durchgangsöffnung 11 relativ zu der Innenkontur 22 der zweiten Durchgangsöffnung 21. Die Bohrvorrichtung 120 ist mittels der Positioniervorrichtung 130 aufgrund von mittels der optischen Messvorrichtung 140 erfassten Positionsdaten relativ zu der Fixiervorrichtung 125 positionierbar. Da das Toleranzausgleichsscheiben-Halbzeug 30 durch die Fixiervorrichtung 125 festlegbar ist, kann auf diese Weise eine definierte Positionierung der Bohrvorrichtung 120, insbesondere des Bohraufsatzes 121 der Bohrvorrichtung 120, relativ zu der Außenkontur 32 des Toleranzausgleichsscheiben-Halbzeugs 40 erfolgen.

Die mittels der optischen Messvorrichtung 140 erfassbaren Messdaten können insbesondere an die Steuerungsvorrichtung 190 weitergegeben werden. Auf dem Datenspeicher 192 der Steuerungsvorrichtung ist bevorzugt ein Programm gespeichert, welches die Recheneinrichtung 190 zur Durchführung der Schritte des oben beschriebenen Verfahrens veranlasst. Insbesondere veranlasst die Recheneinrichtung 191 die Erzeugung von Kommandosignalen, durch welche die Positionierung der Bohrvorrichtung 120 relativ zu der Fixiereinrichtung 125 mittels der Positioniervorrichtung 130 erfolgt. Die Ausbildung der Scheibendurchgangsbohrung 41 kann ebenfalls durch aufgrund eines durch die Recheneinrichtung 191 erzeugten Kommandosignals erfolgen, welches eine Bewegung der Bohrvorrichtung 120 mittels der Positioniervorrichtung 130 in Richtung der Fixiervorrichtung 125 bewirkt.

Die Steuerungsvorrichtung 190 kann insbesondere Teil der Positionierungsvorrichtung 130 sein (nicht gezeigt) oder, wie in Fig.3 beispielhaft gezeigt ist, funktional mit der Positionierungsvorrichtung 130 verbunden sein.

Wie in Fig. 3 gezeigt ist, kann die Bearbeitungskammer 110 eine öffen- und schließbare Zugangsklappe 112 aufweisen. Die Zugangsklappe 112 dient dem wahlweisen freigeben und abdecken einer in dem Gehäuse 111A der Bearbeitungskammer 110 ausgebildeten Entnahmeöffnung 114B. Die Zugangsklappe 112 kann, wie in Fig. 3 beispielhaft gezeigt ist, als eine schwenkbar gelagerte Klappe ausgebildet sein, welche zwischen der in Fig. 3 gezeigten Freigabestellung, in welcher diese die Entnahmeöffnung 114B freigibt, und einer Schließstellung, in welcher die Klappe die Entnahmeöffnung 114B abdeckt, verschwenkbar ist. Alternativ hierzu kann die Zugangsklappe 112 beispielsweise auch als ein zwischen der Freigabestellung und der Schließstellung linear verschiebbarer Schieber oder dergleichen ausgebildet sein.

Fig. 3 zeigt beispielhaft eine bevorzugte Gestaltung der Bearbeitungskammer 110 mit einem Entnahmeraum 113. Der Entnahmeraum 113 bildet einen durch eine Innenwandung 115 definierten Teilraum der Bearbeitungskammer 110 und ist mit dem Arbeitsraum 111 durch eine in der Innenwandung 115 ausgebildete Verbindungsöffnung 114A mit diesem verbunden. Die Verbindungsöffnung 114A ist mittels einer Abdeckeinrichtung 114 abdeckbar. Wie in Fig. 3 beispielhaft gezeigt ist, kann die Abdeckeinrichtung 114 als zwischen einer Freigabestellung, in welcher diese die Verbindungsöffnung 114A freigibt (siehe Fig. 3), und einer Schließstellung, in welcher die Klappe die Verbindungsöffnung 114A abdeckt, verschwenkbare Klappe ausgebildet sein. Selbstverständlich kann die Abdeckeinrichtung 114 auch als ein Schieber oder dergleichen ausgebildet sein. Insbesondere kann die Abdeckeinrichtung 114 derart ausgebildet sein, dass diese in der Schließstellung den Arbeitsraum 111 hermetisch abschließt. Wie in Fig. 3 weiterhin gezeigt ist, weist der Entnahmeraum 113 weiterhin die durch die Zugangsklappe 112 verschließbare Entnahmeöffnung 114B auf. Der Entnahmeraum 113 bildet somit eine vom Arbeitsraum 114 hermetisch trennbare Schleuse. Eine in dem Arbeitsraum 111 hergestellte Toleranzausgleichsscheibe 40 kann mittels einer Transportvorrichtung, beispielsweise der Transportvorrichtung 170 oder einer nicht gezeigten weiteren Transportvorrichtung, bei geschlossener Zugangsklappe 112 durch die Verbindungsöffnung 114A in den Entnahmeraum 113 transportiert werden. Anschließend erfolgt ein Schließen der Verbindungsöffnung 114A mittels der Abdeckeinrichtung 114. Daraufhin kann die Zugangsklappe 112 geöffnet und die Toleranzausgleichsscheibe 40 entnommen werden. Eine entsprechende Ansteuerung der Abdeckeinrichtung 114 und der Zugangsklappe 112 kann beispielsweise mittels der Steuerungsvorrichtung 190 realisiert werden.

Wie in Fig. 3 weiterhin gezeigt ist, kann eine erste Absaugeinrichtung 150 vorgesehen sein, mittels welcher Luft aus dem Entnahmeraum 113 in den Arbeitsraum 111 absaugbar ist. Diese kann beispielsweise während der Freigabestellung der Zugangsklappe 113 aktiviert werden, z.B. durch die Steuerungsvorrichtung 190, um zu vermeiden, dass Bohrstaub oder dergleichen durch die Entnahmeöffnung 114B austritt.

Die optische Messvorrichtung 140 kann insbesondere eine Digitalkamera 141 aufweisen. Dies ist in Fig. 3 schematisch dargestellt. Wie Fig. 3 weiterhin zeigt, kann die optische Messvorrichtung 140 weiterhin ein Positioniergehäuse 142 aufweisen. Das Positioniergehäuse 142 weist eine Öffnung 143 auf und definiert damit eine einseitig offene Kavität. Die Öffnung 143 ist zur Positionierung an einer Bauteiloberfläche vorgesehen. In dem in Fig. 3 gezeigten Beispiel ist die Öffnung 143 über der zweiten Durchgangsöffnung 21 des zweiten Bauteils 20 positioniert, um eine Erfassung M1.1 von Positionsdaten wie oben beschrieben durchzuführen. Die Digitalkamera 141 an einer der Öffnung 143 zugewandten Wandung 144 des Positioniergehäuses 142 angeordnet.

Fig. 3 zeigt weiterhin schematisch eine Verwendung des beschriebenen Bearbeitungssystems 100 in einem Montageraum 200, in welchem ein Zusammenbau eines Luftfahrzeugs 300 stattfindet. Hierbei wird das Bearbeitungssystem 100 vorzugsweise zur Durchführung des oben beschriebenen Verfahrens verwendet. Die mittels des Verfahrens hergestellten Toleranzausgleichsscheiben 40 dienen hierbei dem Toleranzausgleich, beispielsweise wie in Fig. 8 gezeigt zwischen dem Schaft 404 des Bolzens 401 und der Innenkontur 22 der zweiten Durchgangsbohrung 21. Die Bauteilanordnung 400 bildet nach der Montage bevorzugt einen Strukturbereich des Luftfahrzeugs 300 aus. Das erste Bauteil 10 kann beispielsweise einen Boden innerhalb eines Rumpfs des Luftfahrzeugs und das zweite Bauteil 20 eine an dem Rumpf vorgesehene Befestigungsstruktur bilden. Insbesondere für die Verwendung in einem Montageraum 200, in welchem ein Zusammenbau eines Luftfahrzeugs 300 stattfindet, kann das Bearbeitungssystem 100 eine zweite Absaugeinrichtung 190 aufweisen, mittels derer Luft aus dem Arbeitsraum 111 in eine Umgebung außerhalb des Montageraums 200 absaugbar ist.

Obwohl die vorliegende Erfindung vorstehend anhand von Ausführungsbeispielen exemplarisch erläutert wurde, ist sie darauf nicht beschränkt, sondern auf vielfältige Weise modifizierbar.

### BEZUGSZEICHENLISTE

- 10: erstes Bauteil
- 10a: erste Oberfläche des ersten Bauteils
- 10b: zweite Oberfläche des ersten Bauteils
- 11: erste Durchgangsöffnung
- 12: Innenkontur der ersten Durchgangsöffnung
- 20: zweites Bauteil
- 20a: erste Oberfläche des zweiten Bauteils
- 20b: zweite Oberfläche des zweiten Bauteils
- 21: zweite Durchgangsöffnung
- 22: Innenkontur der zweiten Durchgangsöffnung
- 30: Toleranzausgleichsscheiben-Halbzeug
- 32: Außenkontur
- 40: Toleranzausgleichsscheibe
- 41: Scheibendurchgangsöffnung
- 100: Bearbeitungssystem
- 110: Bearbeitungskammer
- 111: Arbeitsraum
- 112: Zugangsklappe
- 113: Entnahmeraum
- 114: Abdeckeinrichtung
- 114A: Verbindungsöffnung
- 114B: Entnahmeöffnung
- 115: Innenwandungen
- 120: Bohrvorrichtung
- 121: Bohraufsatz
- 122: Antriebseinheit
- 125: Fixiervorrichtung
- 126: Ausnehmung
- 130: Positioniervorrichtung
- 140: MessvorrichtungP
- 141: Digitalkamera
- 142: Positioniergehäuse
- 143: Öffnung des Positioniergehäuses
- 144: Wandung des Positioniergehäuses
- 150: erste Absaugeinrichtung
- 160: Magazin
- 170: Transportvorrichtung
- 180: zweite Absaugeinrichtung
- 190: Steuerungsvorrichtung
- 191: Recheneinrichtung
- 192: Datenspeicher
- 200: Montageraum
- 300: Luftfahrzeug
- 400: Bauteilanordnung
- 401: Verbindungsbolzen
- 402: Bolzenfixierungselement
- 403: Anlagescheibe
- 404: Schaft des Bolzens
- 405: Innengewinde
- 406: Außengewinde
- A11: Mittelachse der ersten Durchgangsöffnung
- A21: Mittelachse der zweiten Durchgangsöffnung
- L: Längsrichtung
- M1: Verfahrensschritt
- M1.1: Verfahrensschritt
- M1.1a: Verfahrensschritt
- M1.2: Verfahrensschritt
- M1.2a: Verfahrensschritt
- M1.2b: Verfahrensschritt
- M1.2c: Verfahrensschritt
- M1.2d: Verfahrensschritt
- M2: Verfahrensschritt
- M3: Verfahrensschritt
- R: radiale Richtung
- P1: erster Punkt der Innenkontur der ersten Durchgangsöffnung
- P2: zweiter Punkt der Innenkontur der ersten Durchgangsöffnung
- P3: dritter Punkt der Innenkontur der ersten Durchgangsöffnung
- P4: Pfeil
- P5: Pfeil
- P6: Linie
- X1: erster vorbestimmter Punkt der Innenkontur der zweiten Durchgangsöffnung
- X2: zweiter vorbestimmter Punkt der Innenkontur der zweiten Durchgangsöffnung
- X3: dritter vorbestimmter Punkt der Innenkontur der zweiten Durchgangsöffnung

## Patentansprüche

1. Verfahren zur Herstellung einer Toleranzausgleichsscheibe (40) mit folgenden Verfahrensschritten:
Ermitteln (M1) einer Relativposition einer Innenkontur (12) einer in einem ersten Bauteil (10) ausgebildeten ersten Durchgangsöffnung (11) relativ zu einer Innenkontur (22) einer in einem zweiten Bauteil (20) ausgebildeten zweiten Durchgangsöffnung (21), wobei die erste und die zweite Durchgangsöffnung (11; 21) übereinander angeordnet sind;
Positionieren (M2) einer Bohrvorrichtung (120) relativ zu einem eine der Innenkontur (22) der zweiten Durchgangsöffnung (21) entsprechende Außenkontur (32) aufweisenden Toleranzausgleichsscheiben-Halbzeug (30) derart, dass die Position der Bohrvorrichtung (120) relativ zu der Außenkontur (32) der ermittelten Position der Innenkontur (12) der ersten Durchgangsöffnung (11) entspricht; und
Ausbilden (M3) einer Scheibendurchgangsöffnung (41) in dem Toleranzausgleichsscheiben-Halbzeug (30) mittels der Bohrvorrichtung (120).

2. Verfahren nach Anspruch 1, wobei der Schritt des Ermittelns (M1) der Position der Innenkontur (12) der ersten Durchgangsöffnung (11) relativ zu der Innenkontur (22) der zweiten Durchgangsöffnung (21) ferner die folgenden Schritte umfasst:
optisches Erfassen (M1.1) von Positionsdaten der Innenkonturen (12; 22); und
Berechnen (M1.2) der Position der Innenkontur (12) der ersten Durchgangsöffnung (11) relativ zu der Innenkontur (22) der zweiten Durchgangsöffnung (21) aus den erfassten Positionsdaten.

3. Verfahren nach Anspruch 2, wobei der Schritt des optisches Erfassens von Positionsdaten (M1.1) die Aufnahme (M1.1a) eines Pixelbildes mittels einer Digitalkamera (141) umfasst.

4. Verfahren nach Anspruch 2 oder 3, wobei die Innenkontur (12) der ersten Durchgangsöffnung (11) und die Innenkontur (22) der zweiten Durchgangsöffnung (21) jeweils kreisförmig ausgebildet werden und der Schritt des Berechnens (M1.2) der Position der Innenkontur (12) der ersten Durchgangsöffnung (11) relativ zu der Innenkontur (22) der zweiten Durchgangsöffnung (21) aus den erfassten Positionsdaten das Berechnen (M1.2a) eines minimalen Abstands zwischen der Innenkontur (12) der ersten Durchgangsöffnung (11) und der Innenkontur (22) der zweiten Durchgangsöffnung (21) umfasst.

5. Verfahren nach Anspruch 2 oder 3, wobei der Schritt des Berechnens (M1.2) der Position der Innenkontur (12) der ersten Durchgangsöffnung (11) relativ zu der Innenkontur (22) der zweiten Durchgangsöffnung (21) aus den erfassten Positionsdaten das Berechnen (M1.2b) eines ersten Abstands zwischen einem ersten Punkt (P1) der Innenkontur (12) der ersten Durchgangsöffnung (11) und einem ersten vorbestimmten Punkt (X1) der Innenkontur (22) der zweiten Durchgangsöffnung (21), das Berechnen (M1.2c) eines zweiten Abstands zwischen einem zweiten Punkt (P2) der Innenkontur (12) der ersten Durchgangsöffnung (11) und einem zweiten vorbestimmten Punkt (X2) der Innenkontur (22) der zweiten Durchgangsöffnung (21) sowie das Berechnen (M1.2d) eines dritten Abstands zwischen einem dritten vorbestimmten Punkt (X3) der Innenkontur (22) der zweiten Durchgangsöffnung (21) und einem dritten Punkt (P3) der Innenkontur (12) der ersten Durchgangsöffnung (11) umfasst.

6. Verfahren nach Anspruch 5, wobei der dritte Punkt (P3) der Innenkontur (12) der ersten Durchgangsöffnung (11) identisch mit dem ersten oder dem zweiten Punkt (P1; P2) der Innenkontur (12) der ersten Durchgangsöffnung (11) oder der dritte vorbestimmte Punkt (X3) der Innenkontur (22) der zweiten Durchgangsöffnung (21) identisch mit dem ersten oder dem zweiten vorbestimmten Punkt (X1, X2) der Innenkontur (22) der zweiten Durchgangsöffnung (21) ist.

7. Verfahren nach einem der voranstehenden Ansprüche, wobei das Toleranzscheiben-Halbzeug (30) und die Bohrvorrichtung (120) in einem hermetisch abgeschlossenen Arbeitsraum (111) einer Bearbeitungskammer (110) angeordnet werden.

8. Bearbeitungssystem (100) zur Herstellung einer Toleranzausgleichsscheibe (40) mit:
einer Bearbeitungskammer (110) mit einem hermetisch abschließbaren Arbeitsraum (111);
einer in dem Arbeitsraum (111) mittels einer Positioniervorrichtung (130) bewegbar angeordneten Bohrvorrichtung (120) zum Ausbilden einer Scheibendurchgangsöffnung (41) in einem Toleranzausgleichsscheiben-Halbzeug (30);
einer Fixiervorrichtung (125) zum Fixieren des Toleranzausgleichsscheiben-Halbzeugs (30); und
einer funktional an die Positioniervorrichtung (130) gekoppelten optischen Messvorrichtung (140), welche dazu eingerichtet ist, eine Relativposition einer Innenkontur (12) einer in einem ersten Bauteil (10) ausgebildeten ersten Durchgangsöffnung (11) relativ zu einer Innenkontur (22) einer in einem zweiten Bauteil (20) ausgebildeten zweiten Durchgangsöffnung (21) zu ermitteln, wobei die erste und die zweite Durchgangsöffnung (11; 21) übereinander angeordnet sind;
wobei das Toleranzausgleichsscheiben-Halbzeug (30) eine der Innenkontur (22) der zweiten Durchgangsöffnung (21) entsprechende Außenkontur (32) aufweist;
wobei die Bohrvorrichtung (120) mittels der Positioniervorrichtung (130) aufgrund von mittels der optischen Messvorrichtung (140) erfassten Positionsdaten relativ zu dem Toleranzausgleichsscheiben-Halbzeug (30), wenn dieses mittels der Fixiervorrichtung (125) fixiert ist, derart positionierbar ist, dass die Position der Bohrvorrichtung (120) relativ zu der Außenkontur (32) der ermittelten Position der Innenkontur (12) der ersten Durchgangsöffnung (11) entspricht.

9. Bearbeitungssystem (100) nach Anspruch 8, wobei die Bearbeitungskammer (110) eine öffen- und schließbare Zugangsklappe (112) aufweist.

10. Bearbeitungssystem (100) nach Anspruch 9, wobei die Bearbeitungskammer (110) einen Entnahmeraum (113) aufweist, welcher durch eine mittels einer Abdeckeinrichtung (114) abdeckbaren, insbesondere hermetisch verschließbaren Verbindungsöffnung (114A) mit dem Arbeitsraum (111) verbunden ist und eine durch die Zugangsklappe (112) verschließbare Entnahmeöffnung (114B) aufweist.

11. Bearbeitungssystem (100) nach Anspruch 10, zusätzlich aufweisend:
eine erste Absaugeinrichtung (150) mittels welcher Luft aus dem Entnahmeraum (113) in den Arbeitsraum (111) absaugbar ist.

12. Bearbeitungssystem (100) nach einem der Ansprüche 8 bis 11, zusätzlich aufweisend:
ein in dem Arbeitsraum (111) angeordnetes Magazin (160) zur Aufnahme von Toleranzausgleichsscheiben-Halbzeugen (30); und
eine Transportvorrichtung (170) zum Transport der Toleranzausgleichsscheiben-Halbzeuge (30) aus dem Magazin (160) heraus.

13. Bearbeitungssystem (100) nach einem der Ansprüche 8 bis 12, wobei die optische Messvorrichtung (140) eine Digitalkamera (141) aufweist.

14. Bearbeitungssystem (100) nach Anspruch 13, wobei die optische Messvorrichtung (140) ein Positioniergehäuse (142) mit einer Öffnung (143) zur Positionierung an einer Bauteiloberfläche aufweist, wobei die Digitalkamera (141) an einer der Öffnung (143) zugewandten Wandung (144) des Positioniergehäuses (142) angeordnet ist.

15. Verwendung eines Bearbeitungssystems (100) nach einem der Ansprüche 8 bis 14 in einem Montageraum (200), in welchem ein Zusammenbau eines Luftfahrzeugs (300) stattfindet.

## Claims

1. Method for producing a tolerance compensation disc (40) with the following method steps:
determining (M1) a relative position of an internal contour (12) of a first through-opening (11), formed in a first component (10), relative to an internal contour (22) of a second through-opening (21) formed in a second component (20), wherein the first and second through-openings (11; 21) are arranged one over the other;
positioning (M2) a drill device (120) relative to a tolerance compensation disc semifinished product (30), having an external contour (32) corresponding to the internal contour (22) of the second through-opening (21), in such a way that the position of the drill device (120) relative to the external contour (32) corresponds to the determined position of the internal contour (12) of the first through-opening (11); and
forming (M3) a disc through-opening (41) in the tolerance compensation disc semifinished product (30) by means of the drill device (120).

2. Method according to Claim 1, wherein the step of determining (M1) the position of the internal contour (12) of the first through-opening (11) relative to the internal contour (22) of the second through-opening (21) also comprises the following steps:
optically acquiring (M1.1) position data of the internal contours (12; 22); and
calculating (M1.2) the position of the internal contour (12) of the first through-opening (11) relative to the internal contour (22) of the second through-opening (21) from the acquired position data.

3. Method according to Claim 2, wherein the step of optically acquiring position data (M1.1) comprises the capturing (M1.1a) of a pixel image by means of a digital camera (141).

4. Method according to Claim 2 or 3, wherein the internal contour (12) of the first through-opening (11) and the internal contour (22) of the second through-opening (21) are each embodied in a circular shape, and the step of calculating (M1.2) the position of the internal contour (12) of the first through-opening (11) relative to the internal contour (22) of the second through-opening (21) from the acquired position data comprises calculating (M1.2a) a minimum distance between the internal contour (12) of the first through-opening (11) and the internal contour (22) of the second through-opening (21).

5. Method according to Claim 2 or 3, wherein the step of calculating (M1.2) the position of the internal contour (12) of the first through-opening (11) relative to the internal contour (22) of the second through-opening (21) from the acquired position data comprises calculating (M1.2b) a first distance between a first point (P1) of the internal contour (12) of the first through-opening (11) and a first predetermined position (X1) of the internal contour (22) of the second through-opening (21), calculating (M1.2c) a second distance between a second point (P2) of the internal contour (12) of the first through-opening (11) and a second predetermined point (X2) of the internal contour (22) of the second through-opening (21) as well as calculating (M1.2d) a third distance between a third predetermined point (X3) of the internal contour (22) of the second through-opening (21) and a third point (P3) of the internal contour (12) of the first through-opening (11).

6. Method according to Claim 5, wherein the third point (P3) of the internal contour (12) of the first through-opening (11) is identical to the first or the second point (P1; P2) of the internal contour (12) of the first through-opening (11), or the third predetermined point (X3) of the internal contour (22) of the second through-opening (21) is identical to the first or the second predetermined point (X1, X2) of the internal contour (22) of the second through-opening (21).

7. Method according to one of the preceding claims, wherein the tolerance disc semifinished product (30) and the drill device (120) are arranged in a hermetically sealed working space (111) of a processing chamber (110).

8. Processing system (100) for producing a tolerance compensation disc (40) having:
a processing chamber (110) with a hermetically sealable working space (111);
a drill device (120) which is arranged in the working space (111) so as to be movable by means of a positioning device (130) and has the purpose of forming a disc through-opening (41) in a tolerance compensation disc semifinished product (30) ;
a securing device (125) for securing the tolerance compensation disc semifinished product (30); and
an optical measuring device (140) which is functionally coupled to the positioning device (130) and is configured to determine a relative position of an internal contour (12) of a first through-opening (11), formed in a first component (10), relative to an internal contour (22) of a second through-opening (21), formed in a second component (20), wherein the first and second through-openings (11; 21) are arranged one over the other;
wherein the tolerance compensation disc semifinished product (30) has an external contour (32) which corresponds to the internal contour (22) of the second through-opening (21);
wherein, if the tolerance compensation disc semifinished product (30) is secured by means of the securing device (125), the drill device (120) can be positioned relative to said tolerance compensation disc semifinished product (30) by means of the positioning device (130) on the basis of position data acquired by means of the optical measuring device (140), in such a way that the position of the drill device (120) relative to the external contour (32) corresponds to the determined position of the internal contour (12) of the first through-opening (11).

9. Processing system (100) according to Claim 8, wherein the processing chamber (110) comprises an access flap (112) which can be opened and closed.

10. Processing system (100) according to Claim 9, wherein the processing chamber (110) has an extraction space (113) which is connected to the working space (111) by means of a connecting opening (114A) which can be covered by means of a cover device (114), in particular can be closed off hermetically, and an extraction opening (114B) which can be closed off by the access flap (112).

11. Processing system (100) according to Claim 10, additionally having a first suction device (150) by means of which air can be sucked out of the extraction space (113) into the working space (111).

12. Processing system (100) according to one of Claims 8 to 11, additionally having:
a magazine (160) which is arranged in the working space (111) and has the purpose of receiving tolerance compensation disc semifinished products (30); and
a transport device (170) for transporting the tolerance compensation disc semifinished products (30) out of the magazine (160).

13. Processing system (100) according to one of Claims 8 to 12, wherein the optical measuring device (140) has a digital camera (141).

14. Processing system (100) according to Claim 13, wherein the optical measuring device (140) has a positioning housing (142) with an opening (143) for positioning on a component surface, wherein the digital camera (141) is arranged on a wall (144), facing the opening (143), in the positioning housing (142).

15. Use of a processing system (100) according to one of Claims 8 to 14, in an assembly space (200) in which an aircraft (300) is assembled.

## Revendications

1. Procédé de fabrication d'un disque de compensation de tolérance (40), ledit procédé comportant les étapes suivantes :
déterminer (M1) une position relative d'un contour intérieur (12) d'une première ouverture traversante (11), ménagée dans un premier composant (10), par rapport à un contour intérieur (22) d'une deuxième ouverture traversante (21) ménagée dans un deuxième composant (20), les première et deuxième ouvertures traversantes (11 ; 21) étant disposées l'une au-dessus de l'autre ;
positionner (M2) un dispositif de perçage (120) par rapport à un produit semi-fini à disque de compensation de tolérance (30) qui comporte un contour extérieur (32) correspondant au contour intérieur (22) de la deuxième ouverture traversante (21) de telle sorte que la position du dispositif de perçage (120) par rapport au contour extérieur (32) correspond à la position déterminée du contour intérieur (12) de la première ouverture traversante (11) ; et
ménager (M3) une ouverture de disque traversante (41) dans le produit semi-fini à disque de compensation de tolérance (30) au moyen du dispositif de perçage (120).

2. Procédé selon la revendication 1, l'étape (M1) de détermination de la position du contour intérieur (12) de la première ouverture traversante (11) par rapport au contour intérieur (22) de la deuxième ouverture traversante (21) comprenant en outre les étapes suivantes :
détecter par voie optique (M1.1) des données de position des contours intérieurs (12 ; 22) ; et
calculer (M1.2) la position du contour intérieur (12) de la première ouverture traversante (11) par rapport au contour intérieur (22) de la deuxième ouverture traversante (21) à partir des données de position détectées.

3. Procédé selon la revendication 2, l'étape de détection optique de données de position (M1.1) comprenant la réception (M1.1a) d'une image de pixel à l'aide d'une caméra numérique (141).

4. Procédé selon la revendication 2 ou 3, le contour intérieur (12) de la première ouverture traversante (11) et le contour intérieur (22) de la deuxième ouverture traversante (21) étant chacun formés de manière circulaire et l'étape de calcul (M1.2) de la position du contour intérieur (12) de la première ouverture traversante (11) par rapport au contour intérieur (22) de la deuxième ouverture traversante (21) à partir des données de position détectées comprenant le calcul (M1.2a) d'une distance minimale entre le contour intérieur (12) de la première ouverture traversante (11) et le contour intérieur (22) de la deuxième ouverture traversante (21).

5. Procédé selon la revendication 2 ou 3, l'étape de calcul (M1.2) de la position du contour intérieur (12) de la première ouverture traversante (11) par rapport au contour intérieur (22) de la deuxième ouverture traversante (21) à partir des données de position détectées comprenant le calcul (M1.2b) d'une première distance entre un premier point (P1) du contour intérieur (12) de la première ouverture traversante (11) et un premier point prédéterminé (X1) du contour intérieur (22) de la deuxième ouverture traversante (21), le calcul (M1.2c) d'une deuxième distance entre un deuxième point (P2) du contour intérieur (12) de la première ouverture traversante (11) et un deuxième point prédéterminé (X2) du contour intérieur (22) de la deuxième ouverture traversante (21) et le calcul (M1.2d) d'une troisième distance entre un troisième point prédéterminé (X3) du contour intérieur (22) de la deuxième ouverture traversante (21) et un troisième point (P3) du contour intérieur (12) de la première ouverture traversante (11).

6. Procédé selon la revendication 5, le troisième point (P3) du contour intérieur (12) de la première ouverture traversante (11) étant identique au premier ou au deuxième point (P1 ; P2) du contour intérieur (12) de la première ouverture traversante (11) ou le troisième point prédéterminé (X3) du contour intérieur (22) de la deuxième ouverture traversante (21) étant identique au premier ou au deuxième point prédéterminé (X1, X2) du contour intérieur (22) de la deuxième ouverture traversante (21).

7. Procédé selon l'une des revendications précédentes, le produit semi-fini à disque de tolérance (30) et le dispositif de perçage (120) étant disposés dans un espace de travail (111) fermé hermétiquement d'une chambre de traitement (110).

8. Système de traitement (100) destiné à la fabrication d'un disque de compensation de tolérance (40), ledit système de traitement comprenant :
une chambre de traitement (110) pourvue d'un espace de travail (111) pouvant être fermé hermétiquement ;
un dispositif de perçage (120) disposé de manière mobile dans l'espace de travail (111) à l'aide d'un dispositif de positionnement (130) et destiné à ménager une ouverture traversante (41) dans un disque de compensation de tolérance (30) ;
un dispositif de fixation (125) destiné à fixer le produit semi-fini de disque de compensation de tolérance (30) ; et
un dispositif de mesure optique (140) couplé fonctionnellement au dispositif de positionnement (130) et conçu pour déterminer une position relative d'un contour intérieur (12) d'une première ouverture traversante (11), ménagée dans un premier composant (10), par rapport à un contour intérieur (22) d'une deuxième ouverture traversante (21) ménagée dans un deuxième composant (20), les première et deuxième ouvertures traversantes (11 ; 21) étant disposées l'une au-dessus de l'autre ;
le produit semi-fini à disque de compensation de tolérance (30) comportant un contour extérieur (32) correspondant au contour intérieur (22) de la deuxième ouverture traversante (21) ;
le dispositif de perçage (120) pouvant être positionné à l'aide du dispositif de positionnement (130) sur la base de données de position, détectées par le dispositif de mesure optique (140), par rapport au produit semi-fini à disque de compensation de tolérance (30) lorsque celui-ci est fixé à l'aide du dispositif de fixation (125) de sorte que la position du dispositif de perçage (120) par rapport au contour extérieur (32) corresponde à la position déterminée du contour intérieur (12) de la première ouverture traversante (11).

9. Système de traitement (100) selon la revendication 8, la chambre de traitement (110) comportant un volet d'accès (112) pouvant être ouvert et fermé.

10. Système de traitement (100) selon la revendication 9, la chambre de traitement (110) comportant un espace de retrait (113) qui est relié à l'espace de travail (111) par une ouverture de liaison (114A) pouvant être recouverte, en particulier fermée hermétiquement, à l'aide d'un dispositif de couverture (114) et qui comporte une ouverture de retrait (114B) pouvant être fermée par le volet d'accès (112).

11. Système de traitement (100) selon la revendication 10, comprenant en outre :
un premier dispositif d'aspiration (150) au moyen duquel de l'air peut être aspiré de la chambre de retrait (113) pour être amené dans l'espace de travail (111).

12. Système de traitement (100) selon l'une des revendications 8 à 11, comprenant en outre :
un magasin (160) disposé dans l'espace de travail (111) et destiné à recevoir des produits semi-finis à disque de compensation de tolérance (30) ; et
un dispositif de transport (170) destiné à transporter les produits semi-finis à disque de compensation de tolérance (30) hors du magasin (160).

13. Système de traitement (100) selon l'une des revendications 8 à 12, le dispositif de mesure optique (140) comprenant une caméra numérique (141).

14. Système de traitement (100) selon la revendication 13, le dispositif de mesure optique (140) comportant un boîtier de positionnement (142) pourvu d'une ouverture (143), lequel est destiné au positionnement sur une surface de composant, la caméra numérique (141) étant disposée sur une paroi (144) du boîtier de positionnement (142) qui est dirigée vers l'ouverture (143).

15. Utilisation d'un système de traitement (100) selon l'une des revendications 8 à 14 dans un espace de montage (200) dans lequel s'effectue l'assemblage d'un aéronef (300).
